Europäisches Patentamt

European Patent Office

Office européen des brevets

(11) Veröffentlichungsnummer: **0 134 505**
**B1**

(12) # EUROPÄISCHE PATENTSCHRIFT

(45) Veröffentlichungstag der Patentschrift:
**22.06.88**

(51) Int. Cl.⁴: **H 02 M 7/10,** H 02 M 7/757

(21) Anmeldenummer: **84108267.0**

(22) Anmeldetag: **13.07.84**

(54) **Hochspannungs-Gleichstromversorgung mit Überstromschutz.**

(30) Priorität: **08.09.83 CH 4902/83**

(43) Veröffentlichungstag der Anmeldung:
**20.03.85 Patentblatt 85/12**

(45) Bekanntmachung des Hinweises auf die Patenterteilung:
**22.06.88 Patentblatt 88/25**

(84) Benannte Vertragsstaaten:
**CH DE FR GB IT LI**

(56) Entgegenhaltungen:
**FR - A - 1 590 167**
**FR - A - 2 427 002**
**GB - A - 2 064 901**

(73) Patentinhaber: **BBC Brown Boveri AG, Haselstrasse,
CH-5401 Baden (CH)**

(72) Erfinder: **Schminke, Wolfram, Dr., Hirsfeld 2,
D-7887 Laufenburg (DE)**

ACTORUM AG

# Beschreibung

Die vorliegende Erfindung geht aus von einer Hochspannungs-Gleichstromversorgung mit auf betriebsmässige Kurzschlüsse schnell ansprechendem Überstromschutz gemäss dem Oberbegriff des Anspruchs 1.

Eine solche Versorgung, an die hohe Anforderungen hinsichtlich der abgegebenen Leistung und insbesondere der Kurzschlusssicherheit gestellt werden, ist z.B. aus der Fusionsforschung bekannt (P.L. Mondino und K.I. Selin in: Proc of the 7th Symposium on Engineering Problems of Fusion Research, Knoxville, USA, October 25–28, 1977, p. 1558–1583), wo sie als Versorgungseinheit für die zusätzliche Aufheizung des Plasmas in einem Fusionsreaktor vorgesehen ist (siehe auch die entsprechende Durckschrift EP-A2 0 001 722).

Abhängig von der verwendeten Methode der Plasmaaufheizung werden dort Gleichspannungen im Bereich von 30–200 kV bei Strömen in der Grössenordnung von 50 A benötigt. Erfolgt die Aufheizung insbesondere durch Injektion eines Strahls von Neutralteilchen, können in dem dazu notwendigen Injektorsystem in der Anfahrphase und auch während der eigentlichen, mehrere Sekunden andauernden Strahlinjektion wiederholt Kurzschlüsse durch Überschläge im Elektrodensystem der Strahlkanone auftreten. Um eine Beschädigung des empfindlichen Injektorsystems durch solche Kurzschlüsse zu vermeiden, ist ein schnell ansprechender Überstromschutz notwendig, der den Stromfluss innerhalb von weniger als 10 µs sicher unterbricht und die Hochspannung nach einer Freiwerdezeit von 1–10 ms wieder einschaltet.

Nach dem vorgenannten Stand der Technik wird die Hochspannungsquelle zu diesem Zweck über die in Serie liegende Schalteinrichtung mit der Last, d.h. dem Injektorsystem, verbunden. Der Laststrom fliesst durch die geschlossene Schalteinrichtung und die in einer Ausgangsleitung angeordnete Strommesseinrichtung, wo seine Stärke während des Betriebs fortlaufend gemessen wird. Sobald jedoch der Laststrom einen vorgegebenen Grenzwert überschreitet, wird von dem angeschlossenen Grenzwertdetektor ein Steuersignal an die Schaltersteuerung abgegeben, die wiederum die Schalteinrichtung öffnet und damit den Fluss des Laststroms unterbricht.

Da die Schalteinrichtung in der Ausgangsleitung der Versorgung angeordnet ist, muss sie nicht nur die auftretenden Lastströme schalten können, sondern vor allem eine aussergewöhnliche hohe Spannungsfestigkeit aufweisen, um den Abschaltvorgang nicht zu gefährden. Aus den genannten Gründen wird im Stand der Technik als Schalteinrichtung eine Hochleistungstetrode verwendet, die im durchgeschalteten Zustand den Laststrom als Anodenstrom führt und im Kurzschlussfall über geeignete Steuerspannungen an ihren Steuergittern unterbricht.

Die Verwendung einer Hochleistungstetrode als Schalteinrichtung zwischen Hochspannungsquelle und Last wirft jedoch verschiedene Probleme auf: Aufgrund der zum Betrieb notwendigen Kathodenheizung und des hohen Spannungsabfalls von einigen kV zwischen Kathode und Anode im durchgeschalteten Zustand hat die Tetrode einen Eigenleistungsverbrauch von mehreren 100 kW, die nicht nur den Wirkungsgrad der Versorgung verschlechtern, sondern auch durch entsprechende Kühlungsmaschinen abgeführt werden müssen.

Ebenso sind die Elektroden der Röhre bei den auftretenden Strömen und Spannungen im Schaltbetrieb erheblichen Belastungen ausgesetzt, die zu einer Deformation der internen Tetrodenstruktur und damit zum Ausfall der Schalteinrichtung führen können.

Schliesslich wird der Ausschaltvorgang im Kurzschlussfall von nur einem Schaltelement, der Tetrode, ausgeführt, so dass für den Fall einer Fehlfunktion dieser Tetrode zwischen der Schalteinrichtung und der Hochspannungsquelle aus Sicherheitsgründen noch eine parallel zur Quelle liegende Crowbarschaltung vorgesehen werden muss, die einen zusätzlichen Aufwand an Bauelementen und Steuerungsmitteln erfordert.

Es ist weiterhin aus der FR-A 1 590 167 ein Hochspannungs-Gleichrichter bekannt, bei dem eine Mehrzahl von gesteuerten, an unterschiedlichen Sekundärwicklungen eines Transformators liegende Stromrichterbrücken in Serie geschaltet sind und deren Ausgangsspannungen summiert werden. Als Schutzelemente sind dabei Avalanche-Dioden am Ausgang jeder Brücke und Sicherungen am Eingang jeder Brücke vorgesehen, die ein schnelles Einschalten des Gleichrichters nach einer Abschaltung unmöglich machen.

Schliesslich ist auf dem Gebiet der NF-Verstärkertechnik aus der GB-A 2 064 901 ein Schaltverstärker bekannt, bei dem eine Vielzahl gleichartiger Spannungsquellen wahlweise nach Massgabe des zu verstärkenden NF-Signals in Serie geschaltet werden. Sicherungs- und insbesondere Überstromschutz-System sind bei diesem bekannten Schaltverstärker überhaupt nicht vorgesehen.

Der vorliegenden Erfindung liegt daher die Aufgabe zugrunde, eine Versorgungseinheit für hohe Gleichspannungen und -ströme mit einem schnell ansprechenden Überstromschutz zu schaffen, die neben einem wesentlich verbesserten Wirkungsgrad eine erhöhte Funktionssicherheit aufweist und zudem kostengünstiger aufgebaut werden kann.

Die gestellte Aufgabe wird dadurch gelöst, dass bei einer Hochspannungs-Gleichstromversorgung der eingangs genannten Art die Merkmale aus dem Kennzeichen des Anspruchs vorgesehen sind.

Der Kern der Erfindung besteht darin, gleichermassen die Hochspannungsquelle und die Schalteinrichtung aus einer Mehrzahl von Mittelspannungsquellen und weniger belasteten Schaltelementen aufzubauen, wobei jedes der Schaltelemente nur für die Mittelspannung der ihm zugeordneten Mittelspannungsquelle ausgelegt zu sein braucht. Auf diese Weise werden die Probleme der Spannungsaufteilung vermieden, die auftreten, wenn ein einzelner Schalter durch eine Vielzahl von in Serie liegenden Schaltelementen ersetzt wird.

Die erfindungsgemässe Aufteilung der Hochspannungsquelle in eine Mehrzahl von Mittelspannungsquellen, von denen jede wenigstens ein Schaltelement zum schnellen Abschalten der jeweiligen Mittelspannungsquelle enthält, ermöglicht es, statt der empfindlichen, teuren und in der Lebensdauer begrenzten Hochleistungselektrode eine Mehrzahl von preisgünstigen und auch weniger störanfälligen Schaltelementen einzusetzen, deren Leistungsverbrauch in der Summe der Elemente deutlich unter dem der Tetrode liegt und daher zu einem deutlich verbesserten Wirkungsgrad der Versorgung führt.

Ein weiterer Vorteil liegt in dem Gewinn an Sicherheit, der sich aus dieser Aufteilung ergibt, weil die Funktiontüchtigkeit des Gesamtsystems durch den Ausfall einer oder mehrerer Mittelspannungsquellen und Schaltelemente nicht wesentlich beeinflusst wird.

Ein besonders kostengünstiger Aufbau der Versorgungseinheit ist dann möglich, wenn gemäss einer bevorzugten Ausgestaltung der Erfindung alle Mittelspannungsquellen dieselbe Mittelspannung abgeben, weil dann einerseits bei der Herstellung die Vorteile einer Serienfertigung ausgenutzt werden können, und andererseits durch den modularen Aufbau die Versorgung leicht an unterschiedliche Leistungsanforderungen angepasst werden kann.

Gemäss der Erfindung sind als Schaltelemente in den Mittelspannungsquellen Halbleiterschalter vorgesehen, die neben einer praktisch unbegrenzten Lebensdauer auch eine sehr geringe Durchlassspannung von nur wenigen Volt aufweisen. Dabei werden als GTO (gate turn-off)-Thyristoren bekannte Abschaltthyristoren verwendet, welche die allgemeinen Vorteile eines Halbleiterschalters, kombiniert mit einer hohen Belastbarkeit, besitzen.

In einer Weiterentwicklung des Erfindungsgedankens, wie sie in dem abhängigen Anspruch 3 zum Ausdruck kommt, werden die einzeln an- und abschaltbaren Mittelspannungsquellen in Verbindung mit einer Steuerlogik zur Regelung der Ausgangsspannung mitbenutzt. Gegenüber der aus dem Stand der Technik bekannten Serienregelung mittels der Hochleistungstetrode, die eine bis in den MW-Bereich gehende Verlustleistung zur Folge hat, wird durch das gezielte Zu- und Abschalten einzelner Mittelspannungsquellen ein Wirkungsgrad von bis zu 95% erreicht.

Nachfolgend soll nun die Erfindung anhand der Zeichnung eingehend beschrieben und in Ausführungsbeispielen näher erläutert werden. Es zeigen:

Fig. 1 das Prinzipschaltbild einer bekannten Hochspannungs-Gleichstromversorgung mit Überstromschutz,

Fig. 2 den charakteristischen zeitlichen Verlauf der Spannung einer Hochspannungs-Gleichstromversorgung nach Fig. 1 beim Betrieb eines Neutralstrahl-Injektors,

Fig. 3 die bekannte Auführungsform einer Versorgung nach Fig. 1 mit Hochleistungstetrode,

Fig. 4 das Prinzipschaltbild einer Hochspannungs-Gleichstromversorgung nach der Erfindung,

Fig. 5 ein Ausführungsbeispiel einer Mittelspannungsquelle aus Fig. 4,

Fig. 6 das Prinzipschaltbild einer erfindungsgemässen Hochspannungs-Gleichstromversorgung mit zusätzlicher Steuerung und Regelung der Ausgangsspannung,

Fig. 7 ein Ausführungsbeispiel für die Strommesseinrichtung nach Fig. 4, und

Fig. 8 den zeitlichen Verlauf der geregelten Ausgangsspannung einer Versorgung nach Fig. 6.

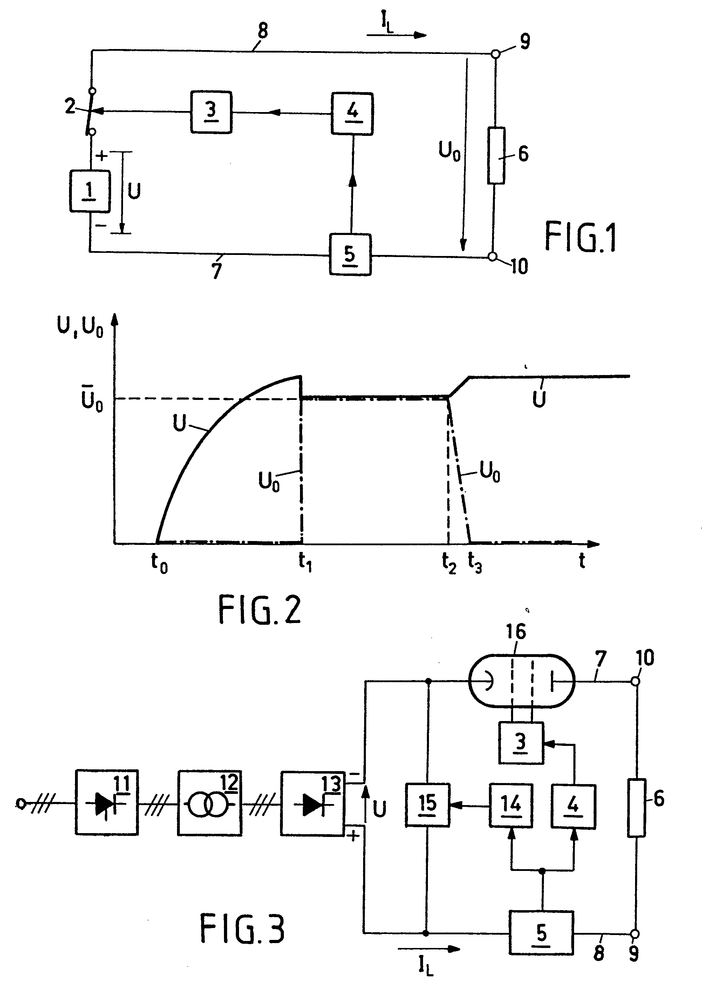

In Fig. 1 ist das Prinzip einer bekannten Hochspannungs-Gleichstromversorgung, im weiteren Verlauf kurz als HV-DC-Versorgung bezeichnet, wie sie beispielsweise in der Fusionsforschung Verwendung findet, dargestellt. Eine Hochspannungsquelle 1 mit einer Quellenspannung $U$ und einer Ausgangsspannung $U_0$ ist über eine Schalteinrichtung 2 und zwei Ausgangsleitungen 7 und 8 mit zwei Ausgangsklemmen 9 und 10 verbunden, zwischen denen eine Last 6, z.B. ein Injektionssystem zur Plasmaaufheizung, liegt.

In der einen Ausgangsleitung 7 ist eine Strommesseinrichtung 5, meist ein Messwiderstand, angeordnet, an deren Ausgang ein dem durch die Last 6 fliessenden Laststrom $J_L$ proportionales Messignal erscheint. Das Messignal gelangt von der Strommesseinrichtung auf einen Grenzwertdetektor 4, in dem ein vorgegebener Grenzwert des Laststroms $J_L$ eingespeichert ist. Sobald dieser Grenzwert überschritten wird, weil beispielsweise in der Last 6 ein Kurzschluss vorliegt, gibt der Grenzwertdetektor ein Signal an eine nachgeschaltete Schaltsteuerung 3 ab, welche die angeschlossene Schalteinrichtung 2 öffnet und damit den Laststrom $J_L$ unterbricht.

Der zeitliche Ablauf der Ausgangsspannung $U_0$ und der Quellenspannung $U$ der Hochspannungsquelle 1 für einen solchen Betriebszyklus ist in einem gemeinsamen Diagramm in Fig. 2 wiedergegeben. Zum Zeitpunkt $t_0$ wird bei offener Schalteinrichtung 2 zunächst die Quellenspannung $U$ durch einen in Fig. 1 nicht eingezeichneten, gesteuerten Stromrichter von Null langsam auf einen Nennwert erhöht, der im Zeitpunkt $t_1$ erreicht ist. In dieser Phase ist die Ausgangsspannung $U_0$ gleich Null. In $t_1$ wird dann die Schalteinrichtung 2 geschlossen und damit die Last 6 an die Hochspannungsquelle 1 gelegt. Die Ausgangsspannung $U_0$ steigt sprunghaft auf den Wert der stationären Ausgangsspannung $\hat{U}_0$, die gleich der durch die Belastung erniedrigten Quellenspannung $U$ ist. Während der nachfolgenden Injektionsperiode bleibt die Ausgangsspannung $U_0$ solange konstant, bis im Zeitpunkt $t_2$ ein Kurzschluss auftritt und der Grenzwertdetektor 4 anspricht. Die Schalteinrichtung 2 öffnet und die Ausgangsspannung $U_0$ fällt in weniger als 10 µs bis $t_3$ auf Null ab, während die Quellenspannung U auf ihren unbelasteten Ursprungswert ansteigt.

Weitere Einzelheiten der bekannten HV-DC-Versorgung zeigt Fig. 3. Von einem Drehstromnetz gelangt Wechselspannung über eine gesteuerte Thyristorbrücke 11, mit der die Quellenspannung U eingestellt wird, über einen Transformator 12 auf einen Gleichrichter 13 mit einem nicht dargestellten Filter. Am Ausgang des Gleichrichters 13 wird die Quellenspannung U abgenommen. Als Schalteinrichtung ist eine Hochleistungstetrode 16 eingesetzt, deren Steuergitter von dem Grenzwertdetektor 4 über die Schaltsteuerung 3 angesteuert werden. Zur Erhöhung der Sicherheit im Kurzschlussfall ist vor der Hochleistungstetrode 16 eine Crowbarschaltung 15 eingefügt, die über einen zweiten Grenzwertdetektor 14 mit höherem Grenzwert gezündet wird, wenn die Hochleistungstetrode 16 beim Überschreiten des ersten Grenzwertes im Grenzwertdetektor 4 nicht in der Lage ist, den Laststrom $J_L$ zu unterbrechen.

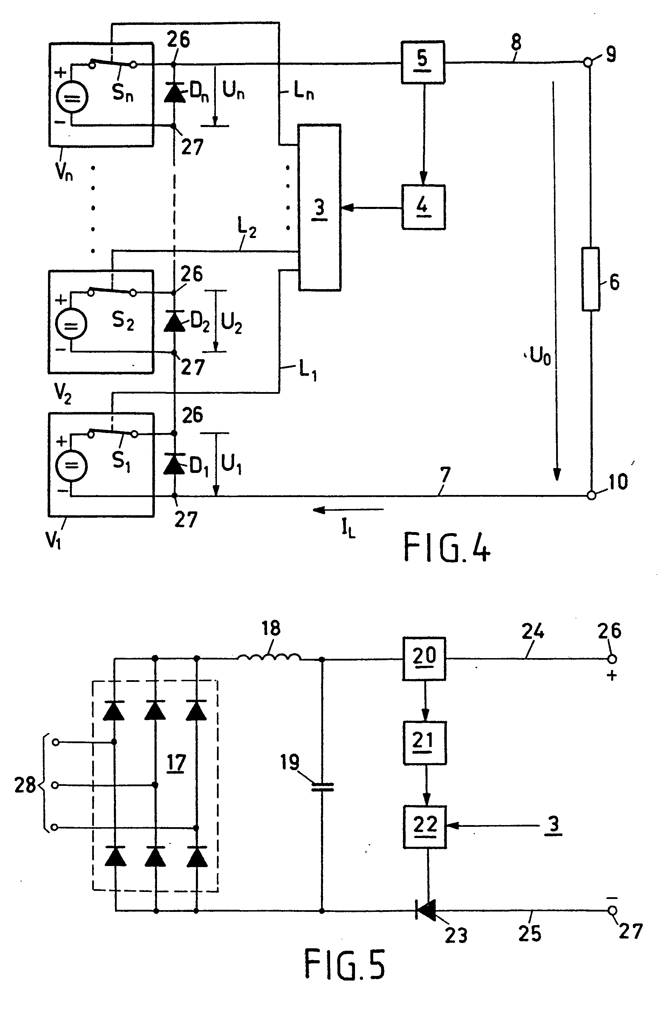

Demgegenüber ist in Fig. 4 das Prinzipschaltbild der erfindungsgemässen HV-DC-Versorgung dargestellt. Die Hochspannungsquelle besteht hier aus einer Mehrzahl von Mittelspannungsquellen $V_1 \ldots V_n$, an deren Ausgängen entsprechende Mittelspannungen $U_1 \ldots U_n$ erscheinen. Im Folgenden werden unter «Mittelspannung» Spannungen von einigen 100 V bis zu einigen kV verstanden. Die Mittelspannungsquellen $V_1 \ldots V_n$ sind mit ihren Ausgängen in Serie geschaltet, so dass sich die Ausgangsspannung $U_0$ als Summe aller Mittelspannungen $U_1 \ldots U_n$ ergibt ($U_0 = U_1 + \ldots + U_n$), wenn alle Mittelspannungsquellen $V_1 \ldots V_n$ eingeschaltet sind.

Jede der Mittelspannungsquellen $V_1 \ldots V_n$ enthält wenigstens ein Schaltelement $S_1 \ldots S_n$, das jeweils innerhalb seiner Quelle so angeordnet ist, dass beim Öffnen des Schaltelements $S_1 \ldots S_n$ aus der zugehörigen Mittelspannungsquelle $V_1 \ldots V_n$ kein Strom fliessen kann. Die Ausgangsklemmen 26 und 27 jeder Mittelspannungsquelle $V_1 \ldots V_n$ sind durch eine in Sperrichtung gepolte Leerlaufdiode $D_1 \ldots D_n$ verbunden. Die Anordnung der Leerlaufdioden $D_1 \ldots D_n$ gewährleistet, dass beim Abschalten eines Teils der Mittelspannungsquellen $V_1 \ldots V_n$ der Laststrom $J_L$ bei entsprechend verminderter Ausgangsspannung $U_0$ ungehindert über die Leerlaufdioden der abgeschalteten Quellen weiterfliessen kann und die geöffneten Schaltelemente nur mit einer Spannung beaufschlagt werden, die nicht wesentlich grösser ist als die Mittelspannung der zugehörigen Mittelspannungsquelle. Wird also beispielsweise das Schaltelement $S_1$ der Mittelspannungsquelle $V_1$ geöffnet, während die übrigen Schaltelemente $S_2 \ldots S_n$ der übrigen Mittelspannungsquellen $V_2 \ldots V_n$ geschlossen sind, vermindert sich die Ausgangsspannung $U_0$ um die Mittelspannung $U_1$. Der entsprechend verminderte Laststrom $J_L$ fliesst dann über die Leerlaufdiode $D_1$. Die anderen Leerlaufdioden $D_2 \ldots D_n$ sind durch die anliegenden Mittelspannungen $U_2 \ldots U_n$ dagegen in Sperrichtung vorgespannt, so dass der Laststrom $J_L$ nicht über diese Leerlaufdioden, sondern die zugehörigen Mittelspannungsquellen $V_2 \ldots V_n$ weitergeleitet wird. Da die Leerlaufdiode $D_1$ in Durchlassrichtung betrieben wird, herrscht zwischen den Anschlussklemmen 26 und 27 der Mittelspannungsquelle $V_1$ nur eine Potentialdifferenz in der Grössenordnung der Durchlassspannung der Leerlaufdiode $D_1$, die gegenüber der Mittelspannung $U_1$ vernachlässigt werden kann. Daher fällt an dem geöffneten Schaltelement $S_1$ nur diejenige Spannung ab, die von der Mittelspannungsquelle $V_1$ als Quellenspannung abgegeben wird und im wesentlichen gleich der Mittelspannung $U_1$ ist.

Ohne die im Ausgang liegenden Leerlaufdioden $D_1 \ldots D_n$ würde dagegen der Laststrom $J_L$ beim Öffnen des einen Schaltelements $S_1$ insgesamt unterbrochen. Dadurch würde das geöffnete Schaltelement $S_1$ mit der vollen Ausgangsspannung $U_0$ belastet und müsste daher in seinen Grenzdaten genauso ausgelegt sein, wie die Hochleistungstetrode nach dem Stand der Technik. Die Leerlaufdioden $D_1 \ldots D_n$ spielen daher eine wesentliche Rolle bei der Aufteilung der Schaltbelastung auf die einzelnen Schaltelemente $S_1 \ldots S_n$ und ermöglichen ein unabhängiges Ein- und Ausschalten der einzelnen Mittelspannungsquellen $V_1 \ldots V_n$.

Die Schaltelemente $S_1 \ldots S_n$ sind über Steuerleitungen $L_1 \ldots L_n$, die wegen der Potentialtrennung zwischen Leistungsteil und Steuerteil vorteilhafterweise als Lichtleiter ausgebildet sind, mit der Schaltsteuerung 3 verbunden, die einen vom Grenzwertdetektor 4 abgegebenen Abschaltbefehl in entsprechende Steuerbefehle für die einzelnen Schaltelemente $S_1 \ldots S_n$ umwandelt. Die Steuerbefehle liegen dabei alle in einem Zeitintervall, das kleiner oder gleich der geforderten Abschaltzeit, also z.B. 10 µs ist. In besonderen Fällen, in denen ein definiertes Abklingverhalten des Laststromes $J_L$ wünschenswert ist, können die Steuerbefehle jedoch auch zeitlich so versetzt abgegeben werden, dass sich der Laststrom $J_L$ in entsprechenden Stufen verringert.

Besonders vorteilhaft ist es, die Mittelspannungsquellen $V_1 \ldots V_n$ im inneren Aufbau und hinsichtlich der abgegebenen Mittelspannung $U_1 \ldots U_n$ identisch auszuführen. Jede der Mittelspannungsquellen $V_1 \ldots V_n$ trägt dann mit derselben Mittelspannung $U_M$ zu der Ausgangsspannung $U_0$ bei, so dass bei einer Anzahl von n Mittelspannungsquellen $U_0 = n \cdot U_m$ gilt. Die Mittelspannungsquellen, von denen bei $U_M = 1$ kV und $U_0 = 100$ kV etwa 100 Stück für eine HV-DC-Versorgung benötigt werden, können dann in grösseren Serien hergestellt werden, was zu einer merklichen Reduktion der Herstellungskosten führt. Darüber hinaus lassen sich bei diesem modularen Aufbau durch Hinzufügen oder Weglassen einzelner oder mehrerer Mittelspannungsquellen auf einfache Weise unterschiedliche Anforderungen an die Höhe der Ausgangsspannung $U_0$ erfüllen.

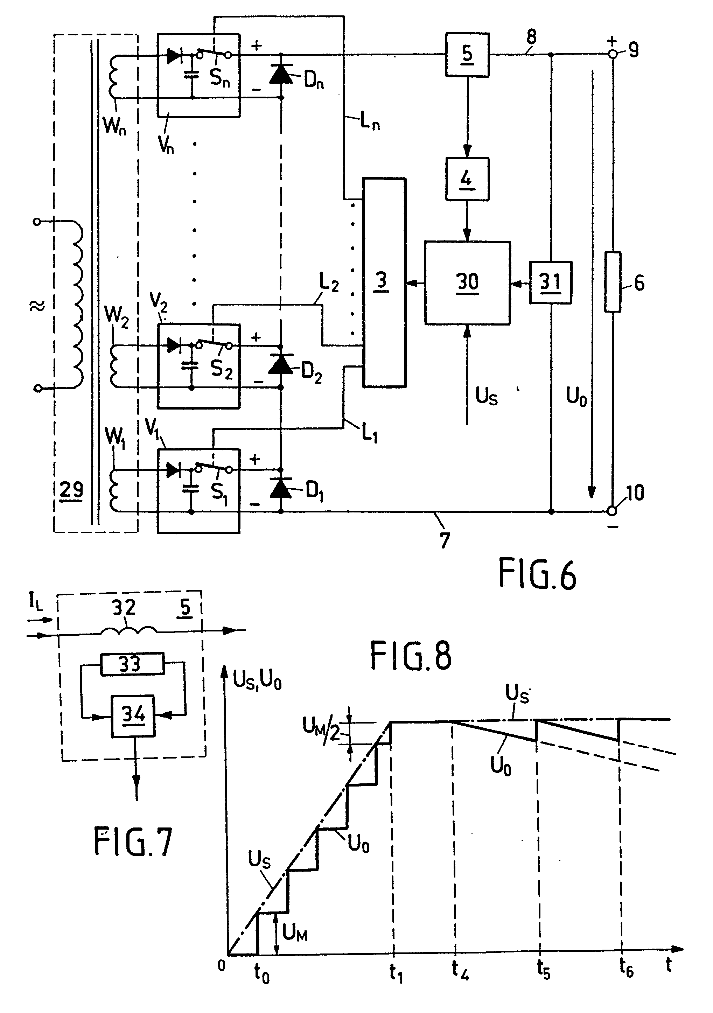

Ein bevorzugtes Ausführungsbeispiel für eine Mittelspannungsquelle $V_1 \ldots V_n$ ist in Fig. 5 wiedergegeben. Auf einen 3-phasigen Wechselspannungseingang 28, der z.B. an die Sekundärwicklung eines nicht eingezeichneten Netztransformators angeschlossen ist, gelangt eine Wechselspannung, die mittels einer Gleichrichterbrücke 17 gleichgerichtet wird. Der verbleibende Wechselspannungsanteil wird in bekannter Weise durch eine in Serie geschaltete Drossel 18 und einen parallelen Filterkondensator 19 ausgesiebt. Zwei Ausgangsleitungen 24 und 25 führen die geglättete Gleichspannung an entsprechende Ausgangsklemmen 26 und 27. In der einen Ausgangsleitung ist als Schaltelement ein in Durchlassrichtung gepolter Abschaltthyristor 23 angeordnet, dessen Steuereingang mit einer Ansteuereinheit 22 verbunden ist.

Die Ansteuereinheit 22 erzeugt die für den Schaltbetrieb des Abschaltthyristors 23 erforderlichen Steuerimpulse, sobald an ihrem Eingang ein entsprechender Steuerbefehl erscheint. In einer ersten Ausführungsform wird dieser Steuerbefehl von der zentralen Schaltersteuerung 3 aus Fig. 4 abgegeben, wobei der Laststrom $J_L$ zentral durch die Strommesseinrichtung 5 und den angeschlossenen Grenzwertdetektor 4 überwacht wird. Diese zentrale Überwachung ist im Aufbau besonders einfach, erlaubt jedoch nur die Vorgabe eines einzigen Grenzwertes, der auf die individuellen Erfordernisse der einzelnen Mittelspannungsquellen $V_1 \ldots V_n$ nicht abgestellt ist.

In einer zweiten Ausführungsform ist daher in jeder Mittelspannungsquelle eine auf die Einzelquelle abgestimmte, zusätzliche Überwachungseinrichtung vorgesehen, die aus einer in die eine Ausgangsleitung 24 eingefügten Strommesseinrichtung 20 und einem weiteren Grenzwertdetektor 21 besteht. Der Ausgang des Grenzwertdetektors 21 ist ebenfalls mit dem Eingang der Ansteuereinheit 22 verbunden, so dass der Abschaltthyristor 23 immer dann abgeschaltet wird, wenn entweder ein Abschaltbefehl aus der zentralen Schaltersteuerung 3 oder dem dezentralen Grenzwertdetektor 21 eintrifft.

Da, wie bereits erwähnt, der Laststrom $J_L$ in einer Anordnung gemäss Fig. 4 durch jede der Mittelspannungsquellen $V_1 \ldots V_n$ fliesst, deren Schaltelement geschlossen ist, wird in den Strommesseinrichtungen 5 und 20 im Normalfall derselbe Strom gemessen. Die Kombination der zentralen Überwachungseinrichtung mit einer dezentralen Stromüberwachung in der Einzelquelle stellt aus diesem Grunde eine doppelte Sicherung dar. Zusätzlich werden jedoch von der dezentralen Überwachung auch diejenigen Kurzschlüsse erfasst, die in der HV-DC-Versorgung vor der Strommesseinrichtung 5 auftreten.

Auf der anderen Seite kann aber aus den genannten Gründen auf die zentrale Überwachung mittels der Strommesseinrichtung 5 auch ganz verzichtet werden. In diesem Fall ist der Überstromschutz in jede der Mittelspannungsquellen $V_1 \ldots V_n$ integriert, wobei jedoch auf eine enge Toleranz im Abschaltverhalten der verschiedenen Quellen geachtet werden muss, um eine möglichst kurze Abschaltzeit für die HV-DC-Versorgung insgesamt zu erreichen.

Die Festlegung der Mittelspannung $U_1 \ldots U_n$ und $U_M$ richtet sich im wesentlichen nach den Grenzdaten der zur Zeit erhältlichen Schaltelemente. Bei der bevorzugten Verwendung von Abschalt (GTO)-Thyristoren können mit Einzelthyristoren Mittelspannungen von einigen kV bei Strömen von mehreren 100 A geschaltet werden. Um eine Serienschaltung von mehreren Abschaltthyristoren und die damit verbundenen Probleme der Spannungsaufteilung zu vermeiden, ist es daher vorteilhaft, Mittelspannungen kleiner 10 kV zu wählen. In einer erprobten Ausführungsform einer Mittelspannungsquelle beträgt die Mittelspannung etwa 1 kV bei einem maximalen Strom von ungefähr 100 A.

Neben dem reinen Überstromschutz kann gemäss einer Weiterentwicklung des Erfindungsgedankens die Anordnung der Mittelspannungsquellen $V_1 \ldots V_n$ nach Fig. 4 auch zur Steuerung und Regelung der Ausgangsspannung $U_0$ herangezogen werden. Da die Mittelspannungsquellen $V_1 \ldots V_n$ einzeln an- und abschaltbar ausgeführt sind, lassen sich durch Kombination verschiedener Mittelspannungen bei geeigneter Ansteuerung verschiedene Spannungsstufen in der Ausgangsspannung $U_0$ realisieren. Geben beispielsweise alle Mittelspannungsquellen $V_1 \ldots V_n$ dieselbe Mittelspannung $U_M$ ab, können durch schrittweises Zuschalten einzelner Quellen abgestufte Ausgangsspannungen $U_0$ von $U_M$ bis $n \cdot U_M$ erzeugt werden. Die Abweichung der tatsächlichen Ausgangsspannung $U_0$ von einer vorgegebenen Sollspannung $U_s$ kann in diesem Fall auf einen maximalen Wert von $U_{M/2}$ begrenzt werden. Diese maximale Abweichung kann weiter verringert werden, wenn nur die Mehrzahl der Mittelspannungsquellen $V_1 \ldots V_n$ dieselbe Mittelspannung $U_M$ abgibt und die Mittelspannungen der übrigen Mittelspannungsquellen abgestuft den $2^m$-ten Teil von $U_M$ ausmachen, wobei $m = 1, 2, \ldots$ ist. Sind also z.B. zwei Mittelspannungsquellen mit den Mittelspannungen $U_{M/2}$ und $U_{M/4}$ vorgesehen, können neben den Spannungsstufen zwischen $I \cdot U_M$ und $(I + 1) U_M$ auch die Stufen $(I + 1/4) U_M$, $(I + 1/2) U_M$, $(I + 3/4) U_M$ eingestellt werden, wobei $I$ eine ganze Zahl ist, so dass sich die maximale Abweichung zwischen Ausgangsspannung $U_0$ und Sollspannung $U_S$ auf $U_M/8$ reduziert.

Das Prinzipschaltbild einer HV-DC-Versorgung mit zusätzlicher Steuerung und Regelung der Ausgangsspannung $U_0$ ist in Fig. 6 dargestellt. Die Mittelspannungsquellen $V \ldots V_n$, deren Gleichrichter- und Filterfunktion symbolisch durch eine Diode und einen Kondensator veranschaulicht ist, liegen eingangsseitig an getrennten Sekundärwicklungen $W_1 \ldots W_n$ eines Netztransformators 29. Der Netztransformator 29 ist der Übersichtlichkeit wegen als einphasiger Transformator dargestellt, wird jedoch üblicherweise in 3phasiger Ausführung zum Anschluss von Mittelspannungsquellen gemäss Fig. 5 verwendet. Zu den bereits aus Fig. 4 bekannten Funktionsblökken der Strommesseinrichtung 5, des Grenzwertdetektors 4 und der Schaltersteuerung 3 tritt hier eine Steuerlogik 30, die einerseits den Abschaltbefehl aus dem Grenzwertdetektor 4 und andererseits eine Eingangsgrösse verarbeitet, die einer von aussen vorgegebenen Sollspannung $U_S$ entspricht.

Die Steuerlogik 30 teilt die Grösse der Soll-spannung $U_S$ durch die Grösse der Mittelspan-nung $U_M$ und ermittelt so die Anzahl der Mittel-spannungsquellen $V_1 \ldots V_n$, die eingeschaltet werden müssen, um die Sollspannung $U_S$ mit der Ausgangsspannung $U_0$ möglichst genau anzunä-hern. Sind darüber hinaus Mittelspannungsquel-len mit binär abgestuften Mittelspannungen $U_M/2^m$ vorhanden, schaltet die Steuerlogik 30 nach Massgabe des bei der Division verbleibenden Rests zusätzlich einen Teil der binär abgestuften Quellen ein, die bei entsprechender Kombination die Abweichung zwischen Sollspannung $U_S$ und Ausgangsspannung $U_0$ weiter verringern. Das Ergebnis aus der Steuerlogik 30 wird in binärer Form an die Schaltsteuerung 3 weitergegeben, von der die entsprechenden Steuerbefehle über die Steuerleitungen $L_1 \ldots L_n$ auf die Schalt-elemente $S_1 \ldots S_n$ gelangen.

Der Steuerfunktion in Abhängigkeit von der Sollspannung $U_S$ ist innerhalb der Steuerlogik 30 die Funktion des Überstromschutzes übergeordnet. Ein Abschaltbefehl aus dem Grenzwertdetektor 4 unterbricht den Vorgang der Steuerung und wird als Abschaltbefehl für alle Mittelspan-nungsquellen $V_1 \ldots V_n$ an die Schaltersteuerung 3 weitergeleitet. Um in der Folge einer solchen Notabschaltung nach Ablauf einer vorgegebenen Freiwerdezeit die Ausgangsspannung $U_0$ automa-tisch wieder einzuschalten, kann innerhalb der Steuerlogik 30 ein Zeitgeber vorgesehen werden, der die Wiedereinschaltung der Mittelspan-nungsquellen $V_1 \ldots V_n$ nach Massgabe der Soll-spannung $U_S$ nach Ablauf der Freiwerdezeit einleitet.

Zusätzlich zu der reinen Steuerung in Abhän-gigkeit von der Sollspannung $U_S$ ist in einer wei-teren, bevorzugten Ausgestaltung gemäss Fig. 6 auch eine Regelung der Ausgangsspannung $U_0$ verwirklicht. Zu diesem Zweck ist parallel zu den Ausgangsklemmen 9 und 10 der HV-DC-Versor-gung eine Spannungsmesseinrichtung 31 ge-schaltet, mit der fortlaufend die tatsächliche Grösse der Ausgangsspannung $U_0$ gemessen wird. Das Ergebnis jeder Messung wird auf einen weiteren Eingang der Steuerlogik 30 gegeben. Die Steuerlogik 30 vergleicht $U_0$ und $U_S$ und bildet die Differenz aus beiden Grössen. Aus dem Betrag und dem Vorzeichen dieser Differenz ermittelt sie, wiederum durch eine Division der bereits beschriebenen Art, welche und wieviele Mittel-spannungsquellen ein- bzw. ausgeschaltet wer-den müssen, um die Abweichungen zwischen $U_0$ und $U_S$ zu minimieren.

Die Steuerlogik 30 wird vorzugsweise durch einen oder mehrere Mikroprozessoren gebildet, welche die für Steuerung und Regelung notwendigen Rechenschritte durchführen und eine geeignete Auswahl der Mittelspannungsquellen $V_1 \ldots V_n$ vornehmen. In diesem Fall kann auch auf einen separaten Grenzwertdetektor 4 verzichtet werden, wenn die Messwerte für den Laststrom $J_L$ aus der Strommesseinrichtung 5 in digitaler Form auf die Steuerlogik 30 gegeben und dort mit dem digitalisierten und abgespeicherten Grenzwert des Laststroms $J_L$ verglichen werden.

Für die direkte Verbindung zwischen Strommesseinrichtung 5 und Steuerlogik 30 ist eine Po-tentialtrennung notwendig, die vorzugsweise in-nerhalb der Strommesseinrichtung 5 gemäss Fig. 7 erfolgt. Der Laststrom $J_L$ fliesst durch eine Feldspule 32, die im Extremfall aus einem geraden Leiterstück bestehen kann. Das von der Feldspule 32 erzeugte Magnetfeld wirkt auf ein Hallelement, das von einem nicht eingezeichneten Speisegerät mit einem konstanten Gleichstrom versorgt wird. Die magnetfeldabhängige Hallspannung wird auf einen A/D-Wandler 34 gegeben, der aus der Hallspannung ein dem Laststrom $J_L$ proportionales Digitalsignal erzeugt und zum Vergleich mit dem vorgegebenen Grenzwert an die Steuerlogik 30 weiterleitet. In gleicher Weise kann auch eine Potentialtrennung innerhalb der Spannungsmesseinrichtung 31 durchgeführt werden, wenn die zu messende Spannung zunächst mit Hilfe eines Präzisionswiderstands in einen entsprechenden Strom umgewandelt wird.

Der Steuerungs- und Regelvorgang ist in sei-nem zeitlichen Ablauf als $U_0(t)$-Kurve in Fig. 8 wiedergegeben. Der strichpunktierte Kurvenzug der Sollspannung $U_S$ markiert den Spannungs-verlauf, den die Ausgangsspannung $U_0$ idealer-weise nehmen sollte. Der lineare Anstieg von $U_S$ zwischen der Zeit $t = 0$ und dem Zeitpunkt $t_1$ wird von der Ausgangsspannung $U_0$ durch sukzessives Zuschalten von Mittelspannungsquellen in Stu-fen $U_M$ nachvollzogen. Da $U_S$ im Zeitpunkt $t_1$ in eine horizontale Gerade übergeht, die nur etwa um $U_{M/2}$ über der zuletzt eingenommenen Stufe von $U_0$ liegt, wird in $t_1$ nicht mehr eine Mittelspan-nungsquelle mit der vollen Mittelspannung $U_M$ zugeschaltet, sondern eine der binär abgestuften Quellen mit einer Mittelspannung von $U_{M/2}$.

Im Zeitpunkt $t_4$ beginnt eine Lastschwankung, die sich durch eine Verkleinerung der Lastimpedenz und ein Absinken der Ausgangsspannung $U_0$ bemerkbar macht. Zum Zeitpunkt $t_5$ ist $U_0$ be-reits soweit abgesunken, dass die Steuerlogik zur Ausregelung der Differenz zwischen $U_S$ und $U_0$ eine Umsteuerung veranlasst. Die Mittelspannungsquelle mit $U_{M/2}$ wird ausgeschaltet, eine an-dere Mittelspannungsquelle mit $U_M$ dafür einge-schaltet. Die resultierende Erhöhung von $U_0$ um $U_{M/2}$ reicht gerade aus, um die Differenz $U_S - U_0$ auszugleichen. Fällt die Ausgangsspannung $U_0$ weiterhin ab, schaltet die Steuerlogik zum Zeit-punkt $t_6$ die Quelle mit der Mittelspannung $U_{M/2}$ wieder ein, so dass erneut eine Anpassung von $U_0$ an $U_S$ erfolgt. Die Regelung gemäss Fig. 8 ist grossen Schwankungen unterworfen, weil bei dieser Darstellung der Übersichtlichkeit wegen von der Existenz nur einer Mittelspannungsstufe mit binär unterteilter Spannung $U_{M/2}$ ausgegangen worden ist. Eine entsprechend geglättete Steuerung und Regelung ergibt sich, wenn innerhalb der HV-DC-Versorgung eine Vielzahl von Mittelspannungsquellen mit binär unterteilten Spannungsstufen $U_{M/2}$, $U_{M/4}$, $U_{M/8}$, $U_{M/16}$... vorhanden sind.

Insgesamt stellt eine HV-DC-Versorgung nach der Erfindung eine in der Herstellung und im Betrieb besonders wirtschaftliche, funktionssichere, flexible und auf einfache Weise steuer- und regelbare Versorgungseinheit dar, die im Vergleich zum Stand der Technik einen stark verbesserten Wirkungsgrad bei gleichzeitig erhöhter Lebensdauer aufweist.

**Patentansprüche**

1. Hochspannungs-Gleichstromversorgung mit auf betriebsmässige Kurzschlüsse schnell ansprechendem Überstromschutz, der den Stromfluss innerhalb von weniger als 10 µs unterbricht und die Hochspannung anschliessend wieder einschaltet, umfassend

(a) eine Hochspannungsquelle (1) mit einer Ausgangsspannung ($U_0$), welche Hochspannungsquelle (1) eine Mehrzahl von Mittelspannungsquellen ($V_1... V_n$) umfasst, die an ihren Ausgangsklemmen (26, 27) jeweils eine Mittelspannung ($U_1... U_n$) abgeben, wobei

(b) die Mittelspannungsquellen ($V_1... V_n$) zum Aufsummieren der Mittelspannungen ($U_1... U_n$) zu der Ausgangsspannung ($U_0$) mit ihren Ausgangsklemmen (26, 27) in Serie geschaltet sind, und

(c) jeder der Mittelspannungsquellen ($V_1... V_n$) wenigstens ein Schaltelement ($S_1... S_n$) in einer Ausgangsleitung (25) zum Abschalten der zugehörigen Mittelspannungsquelle ($V_1... V_n$) enthält, und

(d) die Ausgangsklemmen (26, 27) jeder Mittelspannungsquelle ($V_1... V_n$) durch eine in Sperrrichtung gepolte Leerlaufdiode ($D_1... D_n$) verbunden sind;

(e) wenigstens eine Strommesseinrichtung (5, 20) zum Messen eines Laststroms ($J_L$), der durch eine an die Hochspannungsquelle (1) angeschlossene Last (6) fliesst;

(f) wenigstens einen Grenzwertdetektor (4, 21), der mit der Strommesseinrichtung (5) in Verbindung steht und beim Überschreiten eines vorgegebenen Grenzwertes des Laststroms ($J_L$) die Schaltelemente ($S_1... S_n$) in der Weise ansteuert, dass der Laststrom ($J_L$) unterbrochen wird, dadurch gekennzeichnet, dass

(g) die Schaltelemente ($S_1... S_n$) als Abschaltthyristoren ausgebildet sind, und

(h) zur Steuerung der Ausgangsspannung ($U_o$) eine Steuerlogik (30) vorgesehen ist, die nach Massgabe einer von aussen vorgegebenen Sollspannung ($U_S$) soviele der Mittelspannungsquellen ($V_1... V_n$) einschaltet, dass deren Mittelspannungssumme ungefähr gleich der Sollspannung ($U_S$) ist.

2. Hochspannungs-Gleichstromversorgung nach Anspruch 1, dadurch gekennzeichnet, dass alle Mittelspannungsquellen ($V_1... V_n$) dieselbe Mittelspannung ($U_M$) abgeben und diese Mittelspannung ($U_M$) kleiner als 10 kV, vorzugsweise ungefähr 1 kV, ist.

3. Hochspannungs-Gleichstromversorgung nach Anspruch 1, dadurch gekennzeichnet, dass zur zusätzlichen Regelung der Ausgangsspannung ($U_0$) bei Lastschwankungen eine Spannungsmesseinrichtung (31) zum Messen der Ausgangsspannung ($U_0$) vorgesehen ist, welche Spannungsmesseinrichtung (31) ein der Ausgangsspannung ($U_0$) entsprechendes Messignal an die Steuerlogik (30) abgibt, und die Steuerlogik (30) nach Massgabe der Differenz zwischen der Ausgangsspannung ($U_0$) und der Sollspannung ($U_S$) über die Schaltersteuerung (3) einen Teil der Mittelspannungsquellen ($V_1... V_n$) einschaltet bzw. ausschaltet, so dass die Differenz einen Minimalwert einnimmt.

4. Hochspannungs-Gleichstromversorgung nach Anspruch 3, dadurch gekennzeichnet, dass die Mehrzahl der Mittelspannungsquellen ($V_1... V_n$) dieselbe Mittelspannung ($U_M$) abgibt und die Mittelspannungen der übrigen Mittelspannungsquellen abgestuft den $2^m$-ten Teil dieser Mittelspannung ($U_M$) mit m = 1, 2,... ausmachen.

5. Hochspannungs-Gleichstromversorgung nach einem der Ansprüche 1–4, dadurch gekennzeichnet, dass die Mittelspannungsquellen ($V_1... V_n$) jeweils eine Gleichrichterbrücke (17) mit einem nachfolgenden Filter aus einer Drossel (18) und einem Filterkondensator (19) enthalten und über getrennte Sekundärwicklungen ($W_1... W_n$) eines Netztransformators (29) an ein Wechselspannungsnetz angeschlossen sind.

6. Hochspannungs-Gleichstromversorgung nach einem der Ansprüche 1 bis 5, dadurch gekennzeichnet, dass jede Mittelspannungsquelle ($V_1... V_n$) eine eigene Strommesseinrichtung (20) und einen eigenen Grenzwertdetektor (21) aufweist, derart, dass die jeweilige Mittelspannungsquelle auch dann abgeschaltet wird, wenn der von dieser Mittelspannungsquelle abgegebene Strom einen vorgegebenen Grenzwert überschreitet.

7. Hochspannungs-Gleichstromversorgung nach einem der Ansprüche 1–6, dadurch gekennzeichnet, dass die Strommesseinrichtung (5, 20) eine von dem zu messenden Strom durchflossene Feldspule (32) aufweist, deren Magnetfeld auf ein Halteelement (33) wirkt, dessen Ausgangssignal in einem nachgeschalteten A/D-Wandler (34) in eine dem Strom entsprechende, digitale Grösse umgewandelt und an den Grenzwertdetektor (4, 21) weitergeleitet wird.

**Claims**

1. A high-voltage direct-current supply system with over-current protection which rapidly responds to operational short-circuits and which interrupts the current flow within less than 10 µs and subsequently switches the high voltage on again, comprising

(a) a high-voltage source (1) with an output vol-

tage (U$_0$), which high-voltage source (1) comprises a plurality of medium-high voltage sources (V$_1$... V$_n$) which in each case provide a medium-high voltage (U$_1$... U$_n$) at their output terminals (26, 27), in which arrangement
(b) the output terminals (26, 27) of the medium-high voltage sources (V$_1$... V$_n$) are connected in series in order to add the medium-high voltages (U$_1$... U$_n$) together to become the output voltage (U$_0$), and
(c) each of the medium-high voltage sources (V$_1$... V$_n$) contains at least one switching element (s$_1$... S$_n$) in an output line (25) for switching off the associated medium-high voltage source (V$_1$... V$_n$), and
(d) the output terminals (26, 27) of each medium-high voltage source (V$_1$... V$_n$) are connected by a reverse-biased no-load diode (D$_1$... D$_n$);
(e) at least one current-measuring device (5, 20) for measuring a load current (J$_L$) which flows through a load (6) connected to the high-voltage source (1);
(f) at least one limit detector (4, 21) which is connected to the current measuring device (5) and drives the switching elements (S$_1$... S$_n$), when a predetermined limit of the load current (J$_L$) is exceeded, in such a manner that the load current (J$_L$) is interrupted, characterized in that
(g) the switching elements (S$_1$... S$_n$) are constructed as gate turn-off thyristors, and
(h) a control logic (30) for controlling the output voltage (U$_0$) is provided, which, in accordance with the determination of a nominal voltage (U$_s$) predetermined from outside, switches on such a number of the medium high voltage sources (V$_1$... V$_n$) that their medium-high voltage sum is approximately equal to the nominal voltage (U$_s$).

2. A high-voltage direct-current supply system according to Claim 1, characterised in that all medium-high voltage sources (V$_1$... V$_n$) supply the same medium-high voltage (U$_M$) and this medium-high voltage (U$_M$) is less than 10 kV and preferably approximately 1 kV.

3. A high-voltage direct-current supply system according to Claim 1, characterised in that for additional regulation of the output voltage (U$_0$) in the case of load fluctuations, a voltage-measuring device (31) for measuring the output voltage (U$_0$) is provided which voltage-measuring device (31) supplies a measurement signal, corresponding to the output voltage (U$_0$), to the control logic unit (30) and the control logic unit (30) turns on or off, respectively, as determined by the difference between the output voltage (U$_0$) and the nominal voltage (U$_S$), via the switch control unit (3), a part of the medium-high voltage sources (V$_1$... V$_n$) so that the difference assumes a mimimum value.

4. A high-voltage direct-current supply system according to Claim 3, characterised in that the plurality of the medium-high voltage sources (V$_1$... V$_n$) supplies the same medium-high voltage (U$_M$) and the medium-high voltages of the remaining medium-high voltage sources, graduated, amount to the 2$^m$th part of this medium-high voltage (U$_M$) where m = 1, 2,... .

5. A high-voltage direct-current supply system according to one of Claims 1–4, characterised in that the medium-high voltage sources (V$_1$... V$_n$) contain in each case one rectifier bridge (17) followed by a filter consisting of a choke (18) and a filter capacitor (19) and are connected via separate secondary windings (W$_1$... W$_n$) of a system transformer (29) to an alternating-voltage system.

6. A high-voltage direct-current supply system according to one of Claims 1 to 5, characterised in that each medium-high voltage source (V$_1$... V$_n$) has its own current-measuring device (20) and its own limit detector (21) in such a manner that the respective medium-high voltage source is turned off also if the current supplied by this medium-high voltage source exceeds a predetermined limit value.

7. A high-voltage direct-current supply system according to one of Claims 1–6, characterised in that the current-measuring device (5, 20) is provided with a field coil (32) through which the current to be measured flows and the magnetic field of which acts on a Hall element (33) the output signal of which is converted in a subsequent A/D converter (34) into a digital value corresponding to the current and is passed on to the limit detector (4, 21).

**Revendications**

1. Alimentation de courant continu à haute tension équipée d'une protection contre les surintensités réagissant rapidement à des courts-circuits de service, qui interrompt le flux de courant en moins de 10 µs et réenclenche ensuite la haute tension, comprenant:
(a) une source de haute tension (1) présentant une tension de sortie (U$_0$), cette source de haute tension (1) comprenant plusieurs sources de tension moyenne (V$_1$,..., V$_n$) qui, sur leurs bornes de sortie (26, 27), fournissent chaque fois une tension moyenne (U$_1$,..., U$_n$),
(b) les sources de tension moyenne (V$_1$,..., V$_n$) sont connectées en série par leurs bornes de sortie (26, 27) pour sommer les tensions moyennes (U$_1$,..., U$_n$) et la tension de sortie (U$_0$), et
(c) chacune des sources de tension moyenne (V$_1$,..., V$_n$) contient au moins un élément de commutation (S$_1$,..., S$_n$) dans une ligne de sortie (25) pour couper la source de tension moyenne associée (V$_1$,..., V$_n$), et
(d) les bornes de sortie (26, 27) de chaque source de tension moyenne (V$_1$,..., V$_n$) sont connectées par une diode à vide polarisée en sens bloquant (D$_1$,..., D$_n$),
(e) au moins un dispositif de mesure de courant (5, 20) pour la mesure d'un courant de charge (J$_L$) qui traverse une charge (6) connectée à la source de haute tension (1),
(f) au moins un détecteur de valeur limite (4, 21) qui est connecté au dispositif de mesure de courant (5) et qui, en cas de dépassement par excès d'une valeur limite prédéfinie du courant de charge (J$_L$), active les éléments de commutation

$(S_1,\ldots, S_n)$ d'une manière telle que le courant de charge $(J_L)$ soit interrompu, caractérisée en ce que:

(g) les éléments de commutation $(S_1,\ldots, S_n)$ ont la forme de thyristors de coupure, et

(h) pour commander la tension de sortie $(U_0)$, est prévue une logique de commande (30) qui, en fonction d'une tension de consigne $(U_S)$ prédéfinie de l'extérieur, enclenche un nombre de sources de tension moyenne $(V_1,\ldots, V_n)$ tel que la somme de leurs tensions moyennes soit à peu près égale à la tension de consigne $(U_S)$.

2. Alimentation de courant continu à haute tension suivant la revendication 1, caractérisée en ce que toutes les sources de tension moyenne $(V_1,\ldots, V_n)$ fournissent la même tension moyenne $(U_M)$ et cette tension moyenne $(U_M)$ est inférieure à 10 kV, et est de préférence égale à environ 1 kV.

3. Alimentation de courant continu à haute tension suivant la revendication 1, caractérisée en ce qu'en vue de la régulation supplémentaire de la tension de sortie $(U_0)$ en cas d'oscillations de charge, un dispositif de mesure de tension (31) est prévu pour mesurer la tension de sortie $(U_0)$ et fournit un signal de mesure correspondant à la tension de sortie $(U_0)$ à la logique de commande (30) et la logique de commande (30), en fonction de la différence entre la tension de sortie $(U_0)$ et la tension de consigne $(U_S)$, enclenche ou déclenche par l'intermédiaire de la commande (3) du dispositif de commutation une partie des sources de tension moyenne $(V_1,\ldots, V_n)$ de telle sorte que la différence soit d'une valeur minimale.

4. Alimentation de courant continu à haute tension suivant la revendication 3, caractérisée en ce que les diverses sources de tension moyen-ne $(V_1,\ldots, V_n)$ fournissent la même tension moyenne $(U_M)$ et les tensions moyennes des autres sources de tension moyenne sont égales à cette tension moyenne $(U_M)$ diminuée par échelons de la $2^m$-ième partie de cette tension $(U_M)$ où $M = 1, 2,\ldots$

5. Alimentation de courant continu à haute tension suivant l'une quelconque des revendications 1 à 4, caractérisée en ce que les sources de tension moyenne $(V_1,\ldots, V_n)$ comprennent chaque fois un pont redresseur (17) suivi d'un filtre formé d'une bobine d'arrêt (18) et d'un condensateur de filtre (19) et sont connectées à un réseau de tension alternative par l'intermédiaire d'enroulements secondaires séparés $(W_1,\ldots, W_n)$ d'un transformateur de secteur (29).

6. Alimentation de courant continu à haute tension suivant les revendications 1 à 5, caractérisée en ce que chaque source de tension moyen-ne $(V_1,\ldots, V_n)$ comporte un dispositif de mesure de courant (20) qui lui est propre et un détecteur de valeur limite (21) qui lui est également propre, de telle sorte que la source de tension moyenne en question est également coupée, si le courant fourni par cette source de tension moyenne dépasse une valeur limite prédéfinie.

7. Alimentation de courant continu à haute tension suivant l'une quelconque des revendications 1 à 6, caractérisée en ce que le dispositif de mesure de courant (5, 20) comprend une bobine de champ (32) traversée par le courant à mesurer, dont le champ magnétique agit sur un élément de Hall (33) dont le signal de sortie est converti, dans un convertisseur analogique-numérique (34) prévu en aval, en une grandeur numérique correspondant au courant et est transmis au détecteur de valeur limite (4, 21).

FIG.1

FIG.2

FIG.3

FIG.4

FIG.5

FIG.6

FIG.8

FIG.7